(19)

Europäisches
Patentamt
European
Patent Office
Office européen
des brevets

(11) **EP 3 686 557 B1**

(12) **EUROPEAN PATENT SPECIFICATION**

(45) Date of publication and mention
of the grant of the patent:
**30.04.2025   Bulletin 2025/18**

(21) Application number: **18847637.8**

(22) Date of filing: **17.05.2018**

(51) International Patent Classification (IPC):
$G01S\ 7/497^{(2006.01)}$     $G01C\ 25/00^{(2006.01)}$
$G01C\ 15/00^{(2006.01)}$     $G01S\ 7/48^{(2006.01)}$
$G01S\ 17/86^{(2020.01)}$     $G01S\ 17/42^{(2006.01)}$
$G01S\ 17/89^{(2020.01)}$     $G01S\ 17/931^{(2020.01)}$

(52) Cooperative Patent Classification (CPC):
**G01C 15/002; G01C 25/00; G01S 7/4808;
G01S 7/497; G01S 7/4972; G01S 17/42;
G01S 17/86; G01S 17/89; G01S 17/931**

(86) International application number:
**PCT/CN2018/087251**

(87) International publication number:
**WO 2019/037484 (28.02.2019 Gazette 2019/09)**

(54) **LASER SCANNING DEVICE CALIBRATION METHOD, DEVICE, AND STORAGE MEDIUM**

LASERABTASTVORRICHTUNGKALIBRIERUNGSVERFAHREN, VORRICHTUNG UND
SPEICHERMEDIUM

PROCÉDÉ ET DISPOSITIF D'ÉTALONNAGE DE DISPOSITIF DE BALAYAGE LASER, ET
SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2017   CN 201710731253**

(43) Date of publication of application:
**29.07.2020   Bulletin 2020/31**

(73) Proprietor: **Tencent Technology (Shenzhen)
Company Limited
Shenzhen, Guangdong, 518057 (CN)**

(72) Inventor: **ZENG, Chao
Shenzhen, Guangdong 518057 (CN)**

(74) Representative: **Eisenführ Speiser
Patentanwälte Rechtsanwälte PartGmbB
Postfach 31 02 60
80102 München (DE)**

(56) References cited:
**EP-A1- 2 761 324       EP-A1- 2 990 828
WO-A2-2014/152254    CN-A- 104 019 829
CN-A- 104 833 372     CN-A- 105 180 811
CN-A- 105 203 023     CN-A- 106 996 795
US-A1- 2016 070 981   US-A1- 2017 124 781**

## Description

This application claims priority to Chinese Patent Application No. 201710731253.X, titled "LASER SCANNING DEVICE CALIBRATION METHOD, APPARATUS, DEVICE, AND STORAGE MEDIUM" filed with the Chinese Patent Office on August 23, 2017.

## FIELD

The present disclosure relates to the technical field of unmanned driving, and in particular to a method and an apparatus for calibrating a laser scanning device, a device, and a storage medium.

## BACKGROUND

With the development of the unmanned driving technology, navigation systems in unmanned vehicles can provide navigation paths, so that the unmanned vehicles travel along the navigation paths. In addition, an unmanned vehicle may further scan the surrounding environment in real time by using a laser scanning device, to obtain a three-dimensional image of the surrounding environment, so that the unmanned vehicle can travel based on the surrounding environment and a navigation path, to avoid obstacles in the surrounding environment, thereby ensuring driving safety. However, a laser coordinate system in which the three-dimensional image is generated and a vehicle coordinate system in which the navigation path is generated have a certain position offset and an angle offset. Therefore, before the laser scanning device is used, the laser scanning device is to be calibrated.

In the related art, a process of calibrating the laser scanning device is as follows. A marker is usually established in a calibration field, and multiple calibration points having distinct positions are arranged in the marker, thereby establishing the calibration field including the multiple calibration points. In addition, a vehicle coordinate system is established in the calibration field by taking an unmanned vehicle as a coordinate origin, and coordinates of each calibration point in the vehicle coordinate system are manually measured in a conventional surveying and mapping manner. Then, a laser coordinate system is established by taking the laser scanning device as an origin, and the calibration field is scanned by using the laser scanning device, to obtain a frame of point cloud data. The frame of point cloud data includes a set of surface points of the marker in the calibration field, and coordinates of each point in the set of surface points in the laser coordinate system. Based on the frame of point cloud data, multiple calibration points are manually selected from the set of surface points, to obtain coordinates of each calibration point in the laser coordinate system. According to the coordinates of each calibration point in the vehicle coordinate system and the coordinates of the calibration point in the laser coordinate system, a pose offset of the laser coordinate system relative to the vehicle coordinate system is calculated by using a singular value decomposition (SVD) algorithm. The pose offset includes a value of a position offset and a value of a yaw angle of the laser coordinate system relative to the vehicle coordinate system, and the pose offset is directly used as a value of a laser extrinsic parameter of the laser scanning device. The yaw angle is an included angle between the x axis (the front direction of the laser scanning device) of the laser coordinate system and the x axis (the front direction of the unmanned vehicle) of the vehicle coordinate system. The laser scanning device is calibrated by using the value of the laser extrinsic parameter.

In the implementation process of the embodiments of the present disclosure, it is found by the inventors that the related technology has at least the following problem.

In the foregoing method, the calibration field is required to be manually established, and subsequently, the coordinates of each calibration point in the vehicle coordinate system and the coordinates of each calibration point in the laser coordinate system can only be determined by using a manual measurement or identification method, resulting in low efficiency of the method for calibrating the laser scanning device.

In EP2990828A1, a technique for performing calibration of a laser scanner efficiently is provided. Point cloud position data of a building is obtained by a laser scanner in which exterior orientation parameters are already known. On the other hand, the building is scanned by a laser scanner while a vehicle travels, and point cloud position data of the building measured by the laser scanner is obtained based on a trajectory the vehicle has traveled. Then, exterior orientation parameters of the laser scanner are calculated based on a correspondence relationship between these two point cloud position data.

WO 2014/152254 A2 describes multi-sensory stereo vision sensors suitable for use in robotics, navigation, machine vision, manufacturing, and other applications. In some cases, a sensor includes a stereo camera that produces image data for use in generating disparity maps to determine the positions of objects in the scene and/or the position of the sensor itself. The stereo sensor may include image sensors that are fastened to a unitary frame to prevent undesired drift and a thermal pad that wicks heat away from a processor. The processor may provide means to directly compute stereo disparity maps onboard the sensor. A sensor can also include a laser rangefinder that provides range data suitable for calibrating the stereo camera and for improving its accuracy in certain environments. In some cases, the laser is coupled to a spindle, which in turn is driven by a gear-train through a slipping clutch.

## SUMMARY

According to embodiments of the present disclosure, a method and an apparatus for calibrating a laser scanning device, a device, and a storage medium are provided.

A method for calibrating a laser scanning device is provided as defined in claim 1.

A computer device is provided as defined in claim 8.

A non-volatile computer readable storage medium is provided as defined in claim 13.

Details of one or more embodiments of the present disclosure are provided in the following accompanying drawings and descriptions. Other features, objectives, and advantages of the present disclosure become apparent with reference to the specification, the accompanying drawings, and the claims.

## BRIEF DESCRIPTION OF THE DRAWINGS

To describe the technical solutions in the embodiments of the present disclosure clearer, the accompanying drawings required for describing the embodiments are briefly introduced hereinafter.

FIG. 1 is a schematic diagram of a driving system according to an embodiment of the present disclosure.

FIG. 2 is a flowchart of a method for calibrating a laser scanning device according to an embodiment of the present disclosure.

FIG. 3 is a schematic diagram of a preset scanning route according to an embodiment of the present disclosure.

FIG. 4 is a schematic diagram of a first distance according to an embodiment of the present disclosure.

FIG. 5 is a schematic diagram of a second distance according to an embodiment of the present disclosure.

FIG. 6 is a schematic structural diagram of an apparatus for calibrating a laser scanning device according to an embodiment of the present disclosure.

FIG. 7 is a schematic structural diagram of a computer device according to an embodiment of the present disclosure.

## DETAILED DESCRIPTION OF THE EMBODIMENTS

The technical solutions in the embodiments of the present disclosure are described clearly and completely with reference to the accompanying drawings in the embodiments of the present disclosure. Apparently, the described embodiments are some embodiments of the present disclosure rather than all of the embodiments.

According to the embodiments of the present disclosure, a method for calibrating a laser scanning device is provided. The laser scanning device may be any laser scanning device installed in a vehicle.

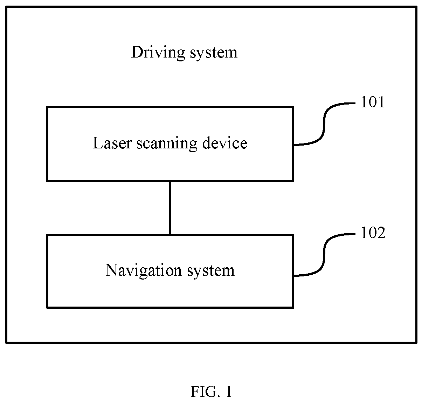

FIG. 1 is a schematic diagram of a driving system according to an embodiment of the present disclosure. The driving system includes a laser scanning device 101 and a navigation system 102.

The navigation system 102 pre-stores map data. The map data includes at least position coordinates of each surface feature element in a target region in a map coordinate system. The navigation system 102 includes a Global Positioning System (GPS) and an inertial measurement unit (IMU). The navigation system 102 may receive a satellite signal by using the GPS, to locate current position coordinates of a vehicle in the map coordinate system in real time. The navigation system 102 may determine a navigation path of the vehicle in the map data according to the current position coordinates of the vehicle and destination position coordinates of the vehicle, and convert path coordinates corresponding to the navigation path in the map coordinate system into coordinates in a vehicle coordinate system via a geocentric coordinate system and a topocentric coordinate system, so that the vehicle travels along the navigation path in the vehicle coordinate system. In addition, the IMU integrates an accelerator and a gyroscope. In a traveling process of the vehicle, the navigation system 102 may further obtain a heading angle and a traveling speed of the vehicle in the vehicle coordinate system by using the IMU in real time, thereby monitoring a traveling status of the vehicle in real time.

The driving system further includes the laser scanning device 101. In the traveling process of the vehicle, the vehicle may further scan a surrounding environment by using the laser scanning device 101 in real time, to obtain multiple frames of point cloud data of the surrounding environment. Each frame of point cloud data includes position coordinates of each obstacle in the surrounding environment in a laser coordinate system, and the obstacle includes, but not limited to, a fixed surface feature element, another moving vehicle and pedestrian in the surrounding environment. The vehicle converts, based on a laser extrinsic parameter of the laser scanning device 101, the position coordinates of each obstacle in the surrounding environment in the laser coordinate system into the coordinates in the vehicle coordinate system. The vehicle can travel based on the navigation path in the vehicle coordinate system and each obstacle in the surrounding environment, thereby ensuring driving safety of the vehicle.

Terms about the driving system and some related coordinate systems, parameters, and the like are described hereinafter.

The map data may refer to map data on a to-be-travelled region that is preset and pre-stored according to user requirements. Further, the map data may be high-precision map data. The high-precision map data is a next-generation navigation map with centimeter-level positioning precision and including information about subsidiary facilities of roads (such as traffic lights, electronic eyes, and traffic signs) and dynamic traffic information. Navigation can be more accurately performed by using the high-precision map data.

The vehicle may be an unmanned vehicle. The unmanned vehicle obtains a navigation path by using the navigation system 102, and obtains multiple frames of point cloud data of the surrounding environment by using the laser scanning device 101, so that the unmanned vehicle can travel based on the navigation path in the vehicle coordinate system and each obstacle in the surrounding environment, thereby ensuring safe traveling of the unmanned vehicle.

The map coordinate system is usually a World Geodetic System for 1984 (WGS84), and position coordinates of each surface feature element are longitude and latitude coordinates and an elevation coordinate of the surface feature element in the WGS84 coordinate system.

In the vehicle coordinate system, the vehicle functions as a coordinate origin, a front direction of vehicle travelling functions as a positive direction of the x axis, a horizontal leftward direction perpendicular to the x axis functions as a positive direction of the y axis, and a vertical upward direction functions as a positive direction of the z axis.

In the laser coordinate system, the laser scanning device functions as a coordinate origin, a front direction of the laser scanning device functions as a positive direction of the x axis, a horizontal leftward direction perpendicular to the x axis functions as a positive direction of the y axis, and a vertical upward direction functions as a positive direction of the z axis.

The geocentric coordinate system is a spatial rectangular coordinate system established by using a mass center of the Earth as a coordinate origin O, using an eastern direction of an intersection line of a first meridian plane and an equatorial plane as a positive direction of the x axis, using a northern direction of a rotational axis of the Earth as a positive direction of the z axis, and using a direction perpendicular to the xOz plane and determined according to the right hand rule as a positive direction of the y axis.

The topocentric coordinate system is a spatial rectangular coordinate system established by using topocentric coordinates as a coordinate system origin, using an eastern direction of a semi-major axis of the earth ellipsoid (east) as a positive direction of the x axis, using a northern direction of a semi-minor axis of the earth ellipsoid (north) as a positive direction of the y axis, and using an upward direction of a normal line of the earth ellipsoid (a direction to the sky) as a positive direction of the z axis.

The laser extrinsic parameter of the laser scanning device includes a position offset and a yaw angle between the laser coordinate system and the vehicle coordinate system. The position offset is an offset distance, in directions of the x axis and the y axis, of the laser coordinate system relative to the vehicle coordinate system. The yaw angle is an included angle between the x axis of the laser coordinate system and the x axis of the vehicle coordinate system, that is, an included angle between the front direction of the laser scanning device and the front direction of the vehicle travelling. In addition, the present disclosure further relates to a heading angle of the vehicle. The heading angle is an included angle between the front direction of the vehicle travelling and a north direction.

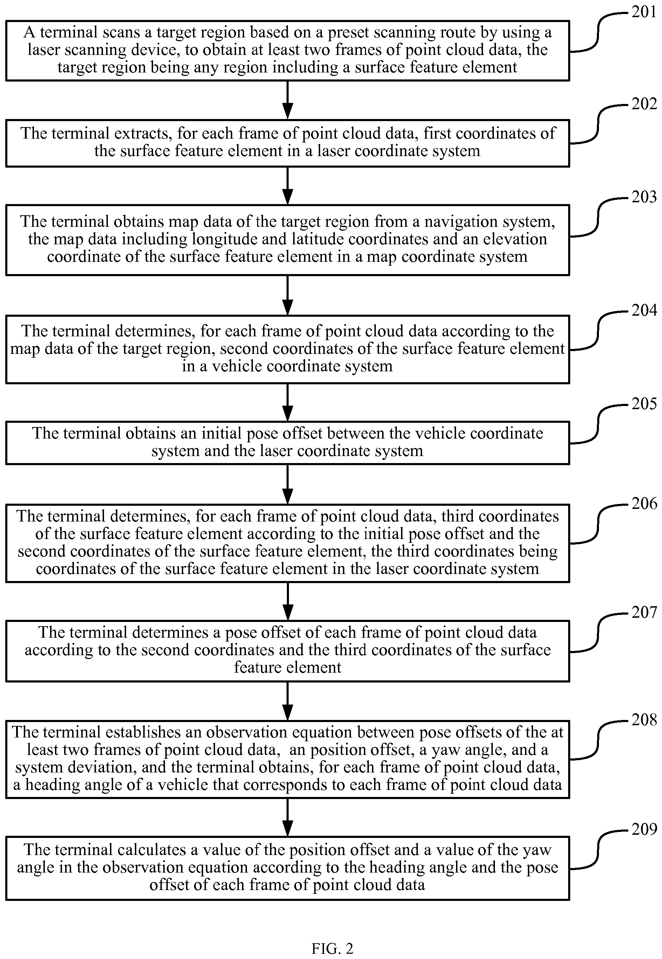

FIG. 2 is a flowchart of a method for calibrating a laser scanning device according to an embodiment of the present disclosure. The method is executed by a terminal, and the terminal is an in-vehicle terminal. Referring to FIG. 2, the method includes the following steps 201 to 209.

In step 201, the terminal scans a target region based on a preset scanning route by using a laser scanning device, to obtain at least two frames of point cloud data. The target region is any region including a surface feature element.

The laser scanning device is installed in a vehicle, and may be arranged in front of or on a side of the vehicle and is configured to scan a surrounding environment of the vehicle. The preset scanning route may be a traveling route designed for scanning the target region.

In the embodiment of the present disclosure, this step may include: obtaining, by the terminal, the preset scanning route, and controlling, by the terminal by using the preset scanning route as a traveling route of the vehicle, the vehicle to travel along the preset scanning route. In a process in which the vehicle travels along the preset scanning route, the terminal controls the laser scanning device to scan the target region once a preset duration lapses, to obtain one frame of point cloud data of the target region. In the entire traveling process, the terminal controls the laser scanning device to perform scanning at least twice, to obtain at least two frames of point cloud data of the target region. Each frame of point cloud data includes, but is not limited to, a set of surface points of each obstacle in the target region and position coordinates of each surface point in the laser coordinate system. The preset duration may be set and changed based on a user requirement and is not limited in the embodiment of the present disclosure. For example, the preset duration may be 100 milliseconds, 5 seconds, or the like.

The surface feature element includes but is not limited to a fixed curb, road guardrail, rod-like surface feature, traffic sign in the target region. The surface feature element is an object having a fixed position in the target region. Therefore, the surface feature element in the target region functions as a basic element of a calibration point, and the laser scanning device can be finally calibrated by determining different coordinates of the surface feature element in respective coordinate systems.

In the embodiment of the present disclosure, the target region may be any region including the surface feature element. To avoid ambient noise interference, the terminal may select an open region having a few pedestrians as the target region. Among multiple frames of point cloud data obtained by scanning the target region by the laser scanning device, there is less unnecessary noise data from other vehicles and the like, thereby reducing ambient noise interference, and improving accuracy of subsequently extracting first coordinates of the surface feature element based on the point cloud data.

In the embodiment of the present disclosure, the preset scanning route may be a scanning route determined based on the target region. Generally, the determined preset scanning route is a circular route surrounding the target region. It is recognized by the inventors that in an actual operation, a traveling direction of the vehicle in the traveling process may be any direction such as east, south, west, and north. The terminal can control the vehicle to travel along a circular path, thereby obtaining point cloud data of the target region in each traveling direction. In addition, when the vehicle travels, the vehicle is required to comply with traffic rules and travels along one side of the path, and each frame of point cloud data collected by the terminal is point cloud data of a region on a left or right side. Therefore, the terminal can control the vehicle to travel along the circular path back and forth, that is, control the vehicle to travel along the circular path in a circle clockwise and then travel along the circular path in a circle counterclockwise, so that scanning can be performed when the vehicle travels along a left side of the path and along a right side of the path, thereby improving accuracy of subsequently determining a value of the laser extrinsic parameter according to a pose offset of each frame of point cloud data.

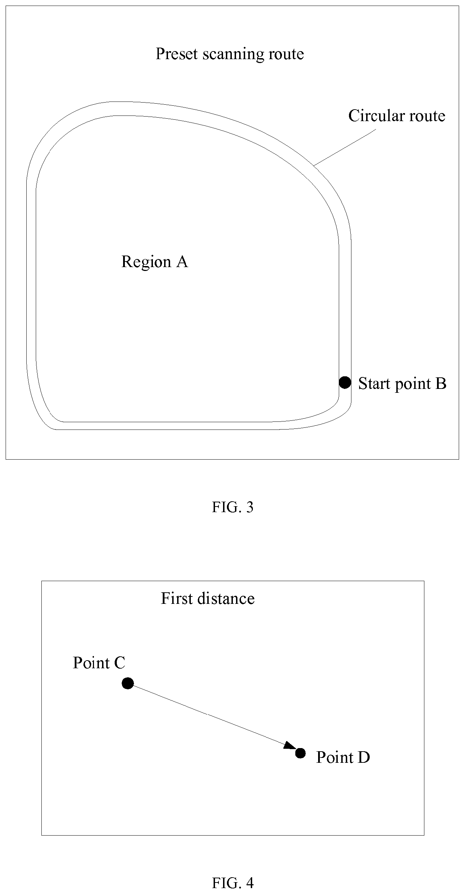

As shown in FIG. 3, the target region is a region A, and the preset scanning route may be a circular route surrounding the region A. That is, the terminal controls the vehicle to travel, from a start point B, along the circular path in a circle clockwise, and return to the start point B; and then travel, from the start point B, along the circular path in a circle counterclockwise.

In step 202, the terminal extracts, for each frame of point cloud data, first coordinates of the surface feature element in a laser coordinate system.

In the embodiment of present disclosure, since each frame of point cloud data includes the set of surface points of each obstacle in the target region and the position coordinates of each surface point in the laser coordinate system, the terminal further requires to extract the first coordinates of the surface feature element from each frame of point cloud data. The first coordinates are coordinates of the surface feature element in the laser coordinate system.

For each frame of point cloud data, the terminal extracts a point set corresponding to the surface feature element from the point cloud data by using a preset extraction algorithm. For each surface feature element, a position coordinates set, in the laser coordinate system, for a point set corresponding to the surface feature element functions as first coordinates of the surface feature element, to obtain the first coordinates of the surface feature element included in each frame of point cloud data. The preset extraction algorithm may be set and changed based on a user requirement, and is not limited in the embodiment of the present disclosure. For example, the preset extraction algorithm may be a segmentation-based extraction algorithm or a detection-based extraction algorithm.

It should be noted that step 201 and step 202 actually describe a specific implementation of the process of obtaining, by the terminal based on the at least two frames of point cloud data obtained by the laser scanning device by scanning the target region, the first coordinates of the surface feature element in each frame of point cloud data. However, the foregoing specific implementation may be replaced with another implementation, and in the foregoing specific implementation, the point cloud data is obtained through real-time scanning. In an actual scenario, the at least two frames of point cloud data of the target region may be obtained from pre-scanned historical data. This is not limited in the embodiment of the present disclosure.

In step 203, the terminal obtains map data of the target region from a navigation system. The map data includes longitude and latitude coordinates and an elevation coordinate of the surface feature element in a map coordinate system.

In the embodiment of the present disclosure, the navigation system of the vehicle stores the map data of the target region, and the terminal may obtain the map data of the target region from the navigation system according to region information of the target region. Practically, the navigation system may further store map data of any region other than the target region. The map data actually is high-precision map data of the target region. Therefore, the map data of the target region includes at least position coordinates of the surface feature element in the target region in the map coordinate system. The region information may be a region identifier or latitude and longitude ranges of the target region. For example, the region identifier may be a name of the region.

In the embodiment of the present disclosure, the terminal requires to obtain a difference about the target region between a vehicle coordinate system and the laser coordinate system. Therefore, after the terminal obtains the first coordinates of the surface feature element in the target region, the terminal further requires to obtain the position coordinates of the surface feature element in the map coordinate system, so that the terminal subsequently determines second coordinates of the surface feature element in the vehicle coordinate system.

The terminal may locate current position coordinates of the vehicle in the map coordinate system by using the navigation system. Therefore, when obtaining each frame of point cloud data, the terminal further requires to obtain the position coordinates of the surface feature element included in the frame of point cloud data in the map coordinate system by using the map data in the navigation system, and convert the position coordinates into the second coordinates in the vehicle coordinate system.

In a possible implementation, the region information may be a region identifier, and the terminal may store a correspondence between the region identifier and the map data. Accordingly, the process of obtaining, by the terminal, the map data of the target region from the navigation system may include: obtaining, by the terminal, the region identifier of the target region, and obtaining, according to the region identifier of the target region, the map data corresponding to the target region from the correspondence between the region identifier and the map data.

In a possible implementation, the region information may be latitude and longitude ranges, and the terminal may store a correspondence between the latitude and longitude ranges and the map data. Accordingly, the process of obtaining, by the terminal, the map data of the target region from the navigation system may include: obtaining, by the terminal, the latitude and longitude ranges of the target region, and obtaining, according to the latitude and longitude ranges of the target region, the map data corresponding to the target region from the correspondence between the latitude and longitude ranges and the map data.

In step 204, the terminal determines, for each frame of point cloud data according to the map data of the target region, second coordinates of the surface feature element in a vehicle coordinate system.

In a vehicle traveling process, when the terminal obtains different frames of point cloud data, the vehicle coordinate system taking the vehicle as an origin also moves with the vehicle. To determine second coordinates of a corresponding surface feature element in each frame of point cloud data in the vehicle coordinate system, when obtaining each frame of point cloud data, the terminal obtains, from the map data according to the surface feature element included in the frame of point cloud data, the longitude and latitude coordinates and the elevation coordinate of the surface feature element in the map coordinate system. The terminal determines, according to the longitude and latitude coordinates and the elevation coordinate of the surface feature element in the map coordinate system, the second coordinates of the surface feature element in the vehicle coordinate system.

Therefore, the process of determining, by the terminal according to the longitude and latitude coordinates and the elevation coordinate of the surface feature element in the map coordinate system, the second coordinates of the surface feature element in the vehicle coordinate system may be performed as follows. The terminal first converts the longitude and latitude coordinates and the elevation coordinate of the surface feature element in the map coordinate system into position coordinates in a geocentric coordinate system taking a mass center of the Earth as an origin, and then, converts the position coordinates of the surface feature element in the geocentric coordinate system into position coordinates in a topocentric coordinate system. The terminal obtains a heading angle of the vehicle by using an IMU of the navigation system, and converts the position coordinates of the surface feature element in the topocentric coordinate system into the second coordinates in the vehicle coordinate system according to the heading angle.

In the embodiment of the present disclosure, the coordinate origins of the topocentric coordinate system and the vehicle coordinate system are the same, but positive directions of the x axis and the y axis in the topocentric coordinate system are different from that in the vehicle coordinate system. An included angle between the positive direction of the x axis of the vehicle coordinate system and the positive direction of the y axis of the topocentric coordinate system is the heading angle of the vehicle. Therefore, the terminal may first convert the position coordinates of the surface feature element in the map coordinate system into the position coordinates in the topocentric coordinate system via the geocentric coordinate system, and then finally obtain the second coordinates of the surface feature element according to the heading angle of the vehicle.

In the embodiment of the present disclosure, a system deviation exists in the map data obtained by using the navigation system. The system deviation indicates a displacement deviation between the position coordinates of the surface feature element in the map data in the map coordinate system and actual position coordinates of the surface feature element in the map coordinate system. Therefore, to improve accuracy of determining the second coordinates, the terminal further requires to consider impact of the system deviation on the second coordinates. Specifically, the process of converting, by the terminal according to the heading angle, the position coordinates of the surface feature element in the topocentric coordinate system into the second coordinates in the vehicle coordinate system may be performed as follows. The terminal obtains an initial system deviation of the map data, and adjusts the position coordinates in the topocentric coordinate system according to the initial system deviation. The terminal converts, according to the heading angle, position coordinates obtained after the adjustment into the second coordinates in the vehicle coordinate system.

The process of adjusting the position coordinates may be performed as follows. The initial system deviation may be represented by ( $x'_0$ , $y'_0$ ). That is, the terminal translates the position coordinates of the surface feature element in the topocentric co-ordinate system by a distance of $x_0'$ units along the positive direction of the x axis and by a distance of $y_0'$ units along the positive direction of the y axis.

It should be noted that step 203 and step 204 actually describe a specific implementation of the process of determining, by the terminal based on the map data of the target region, the second coordinates of the surface feature element in each frame of point cloud data in the vehicle coordinate system. However, the foregoing specific implementation may be replaced with another implementation, and in the foregoing specific implementation, the map data of the target region is obtained from the navigation system, to obtain the second coordinates. In an actual operation, the terminal may obtain the map data of the target region from the navigation system in advance, stores the map data of the target region in the terminal, and determines the second coordinates based on the map data of the target region stored in the terminal. This is not limited in the embodiment of the present disclosure.

In the embodiment of the present disclosure, the pose offset of each frame of point cloud data is a pose offset between the laser coordinate system and the vehicle coordinate system generated when the terminal obtains each frame of point cloud data. As the vehicle moves, the laser coordinate system taking the laser scanner as the coordinate origin and the vehicle coordinate system taking the vehicle as the coordinate origin also move. In this case, the pose offsets of different frames of point cloud data may be the same or different. Therefore, the terminal further requires to determine the pose offset of each frame of point cloud data by performing the following step 205 to step 207.

In step 205, the terminal obtains an initial pose offset between the vehicle coordinate system and the laser coordinate system.

In the embodiment of the present disclosure, the pose offset includes a value of a position offset and a value of a yaw angle between the vehicle coordinate system and the laser coordinate system. The position offset between the vehicle coordinate system and the laser coordinate system may be represented by position coordinates of the coordinate origin of the laser coordinate system in the vehicle coordinate system, and the yaw angle may be represented by an included angle between the x axis of the laser coordinate system and the x axis of the vehicle coordinate system.

In the embodiment of the present disclosure, first, an initial pose offset of each frame of point cloud data is determined in step 205, and then, a pose offset of each frame of point cloud data is determined in step 206 and step 207. The initial pose offset includes the value of the initial position offset and the value of the initial yaw angle.

In step 205, the terminal may pre-obtain and pre-store, through measurement, an initial pose offset between the vehicle coordinate system and the laser coordinate system, and use the initial pose offset as the initial pose offset of each frame of point cloud data. Specifically, the terminal may measure, by using measurement tools such as measuring tapes, coordinates of the laser scanning device in the vehicle coordinate system and the included angle between the x axis of the laser coordinate system and the x axis of the vehicle coordinate system, and uses the measured coordinates as the value of the initial position offset and uses the measured included angle as the value of the initial yaw angle.

In step 206, the terminal determines, for each frame of point cloud data, third coordinates of the surface feature element according to the initial pose offset and the second coordinates of the surface feature element. The third coordinates are coordinates of the surface feature element in the laser coordinate system.

Step 206 may be performed as follows. For each frame of point cloud data, the terminal performs position offsetting on the second coordinates of the surface feature element according to the value of the initial position offset in the initial pose offset of the frame of point cloud data, and performs, according to the value of the initial yaw angle in the initial pose offset of the frame of point cloud data, angle offsetting on the second coordinates subjected to the position offsetting. The terminal uses position coordinates obtained after performing the position offsetting and the angle offsetting as the third coordinates of the surface feature element.

The value of the initial position offset may be represented by ( dx", dy"), and the initial yaw angle may be represented by dyaw". That is, the terminal translates the second coordinates of the surface feature element by a distance of dx" units along the positive direction of the x axis and by a distance of dy" units along the positive direction of the y axis, and rotates the translated second coordinates by an angle of dyaw" units counterclockwise.

In step 207, the terminal determines a pose offset of each frame of point cloud data according to the first coordinates and the third coordinates of the surface feature element.

In the embodiment of the present disclosure, since each frame of point cloud data corresponds to one pose offset, the terminal may first determine, in step 207, a pose offset corresponding to each frame of point cloud data, so as to subsequently determine, according to pose offsets corresponding to multiple frames of point cloud data, a pose offset that can reflect a general rule.

Step 207 may be implemented by the following step 2071 and step 2072.

In step 2071, the terminal calculates a first distance between each first dotted element and a neighboring second dotted element and a second distance between each first dotted element and a neighboring linear element according to the first coordinates and the third coordinates of the surface feature element.

In the embodiment of the present disclosure, in each frame of point cloud data, each surface feature element includes dotted elements and a linear element. The first dotted element is a dotted element in a surface feature element corresponding to the first coordinates, the second dotted element is a dotted element in the surface feature element corresponding to the third coordinates, and the linear element is a linear element in the surface feature element corresponding to the third coordinates.

For each frame of point cloud data, a distance between the first dotted element and a neighboring element may be calculated in any one of the following manners.

In a first manner, the first distance between the first dotted element and the second dotted element in the surface feature element of each frame of point cloud data is calculated as a reference distance for subsequent matching the first coordinates and the third coordinates.

In this step, the terminal calculates, according to position coordinates of each first dotted element in the laser coordinate system and position coordinates of a second dotted element adjacent to the first dotted element in the laser coordinate system, a first distance between the first dotted element and the second dotted element.

It should be noted that, the second dotted element adjacent to the first dotted element is a second dotted element that is nearest to the first dotted element, among multiple second dotted elements taking the first dotted element as a center.

As shown in FIG. 4, a point C indicates the first dotted elements, a point D indicates the second dotted element adjacent to the point C, and the terminal may calculate the first distance between the point C and the point D.

In a second manner, the second distance between the first dotted element and the linear element in the surface feature element of each frame of point cloud data is calculated as a reference distance for subsequent matching the first coordinates and the third coordinates.

The second distance between the first dotted element and the neighboring linear element is a normal distance from the first dotted element to the linear element. Therefore, in this step, the terminal calculates, according to position coordinates of each first dotted element in the laser coordinate system and position coordinates of a linear element adjacent to the first dotted element in the laser coordinate system, a normal distance between the first dotted element and the linear element, as the second distance.

It should be noted that, the linear element adjacent to the first dotted element is a linear element that is nearest to the first dotted element, among multiple linear elements taking the first dotted element as a center.

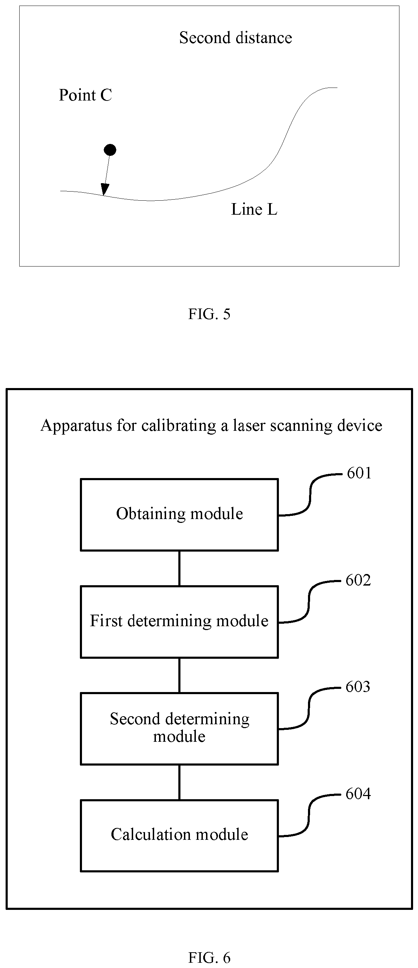

As shown in FIG. 5, a point C indicates the first dotted element, a line L indicates the linear element adjacent to the point C, and the terminal may calculate the normal distance between the point C and the line L, so as to obtain the second distance.

In this step, the terminal determines multiple first distances based on position coordinates of multiple first dotted elements and position coordinates of multiple second dotted elements, and determines multiple second distances based on the position coordinates of multiple first dotted elements and position coordinates of multiple linear elements.

In step 2072, the terminal determines the pose offset of each frame of point cloud data according to the first distance and the second distance.

In the embodiment of the present disclosure, the terminal may determine the pose offset of each frame of point cloud data by performing multiple times of iterative matching on the first coordinates and the third coordinates of the surface feature element.

The process includes the following step a to step g.

In step a, for each frame of point cloud data, according to the first distance and the second distance, the terminal selects a first dotted element for which the first distance is less than a first preset threshold and a second dotted element corresponding to the first dotted element, and selects a first dotted element for which the second distance is less than the first preset threshold and a linear element corresponding to the first dotted element.

The second dotted element corresponding to the first dotted element is a second dotted element adjacent to the first dotted element when the terminal calculates the first distance. The linear element corresponding to the first dotted element is a linear element adjacent to the first dotted element when the terminal calculates the second distance.

In step b, the terminal determines, according to the selected first dotted element and second dotted element, and the selected first dotted element and linear element and based on an expression of a mean square error between the first coordinates and the third coordinates, an offset matrix that minimizes a value of the mean square error, and uses, the offset matrix that minimizes the value of the mean square error as an intermediate offset matrix of the first coordinates and the third coordinates.

In step c, the terminal updates an initial offset matrix of the frame of point cloud data according to the intermediate offset matrix of the first coordinates and the third coordinates, and multiplies an updated initial offset matrix by the second coordinates to obtain fourth coordinates, thereby completing the first time of iterative matching.

The process of updating, by the terminal, an initial offset matrix of the frame of point cloud data according to the intermediate offset matrix of the first coordinates and the third coordinates may include: multiplying, by the terminal, the intermediate offset matrix between the first coordinates and the third coordinates by the initial offset matrix of the frame of point cloud data, to obtain the updated initial offset matrix.

It should be noted that the foregoing step c actually indicates a process of converting the second coordinates in the vehicle coordinate system back into coordinates in the laser coordinate system. An implementation of step c is the same as that of step 206, and details are not described herein again.

In step d, the terminal calculates a third distance between each first dotted element and a neighboring second dotted element and a fourth distance between each first dotted element and a neighboring linear element according to the first coordinates and the fourth coordinates of the surface feature element.

Step d actually indicates a process of re-calculating the first distance and the second distance according to the first coordinates and the fourth coordinates in the laser coordinate system that are obtained through the second time of conversion. An implementation of step d is the same as that of step 2071, and details are not described herein again.

In step e, through performing step a to step c, an initial offset matrix after the second time of update is determined, thereby completing the second time of iterative matching.

In step f, multiple times of iterative matching is completed by performing step a to step e. In a process of the multiple iterations, in a case that a minimum value of the mean square error corresponding to the intermediate offset matrix is less than a second preset threshold, an initial offset matrix updated according to the intermediate offset matrix is obtained, and the obtained initial offset matrix is used as the offset matrix of the frame of point cloud data. Alternatively, in a case that the number of times of iterative matching reaches a third preset threshold, an initial offset matrix updated in a process of the last time of iterative matching is obtained, and the obtained initial offset matrix is used as the offset matrix of the frame of point cloud data.

In step g, the terminal determines the pose offset of the frame of point cloud data according to the offset matrix of the frame of point cloud data.

Step b may be performed as follows. The terminal uses the offset matrix minimizing the value of the mean square error as the intermediate offset matrix of the first coordinates and the third coordinates by using the following formula 1, that is, the expression of the mean square error, according to the selected first dotted element and the second dotted element corresponding to the first dotted element, and the selected first dotted element and the linear element corresponding to the first dotted element:

Formula 1:
$$\mathrm{E}\,(\,\mathrm{X},\mathrm{Y}\,)=\sum_{i=1}^{m}(\mathrm{M}\mathrm{x}_{i}-\mathrm{y}_{i})^{2}\,,$$

in which, X indicates the first coordinates of the surface feature element, Y indicates the third coordinates of the surface feature element, $E(X, Y)$ indicates the mean square error between the first coordinates and the third coordinates of the surface feature element, $x_i$ indicates an i-th first dotted element among multiple first dotted elements for which the first distance or the second distance is not greater than a preset threshold, $y_i$ indicates a second dotted element or a linear element corresponding to the i-th first dotted element, m indicates the number of the first dotted elements for which the first distance or the second distance is not greater than the preset threshold, and M indicates the intermediate offset matrix of the first coordinates and the third coordinates.

In the embodiment of the present disclosure, the intermediate offset matrix of the first coordinates and the third

$$M=\begin{bmatrix} \cos(\mathrm{dyaw}') & -\sin(\mathrm{dyaw}') & \mathrm{dx}' \\ \sin(\mathrm{dyaw}') & \cos(\mathrm{dyaw}') & \mathrm{dy}' \\ 0 & 0 & 1 \end{bmatrix}.$$

coordinates may be represented by M, and                              The intermediate offset matrix includes the value (dx', dy') of the position offset between the first coordinates and the third coordinates and the value of dyaw' of the yaw angle.

The first preset threshold, the second preset threshold, and the third preset threshold may be set and changed according to a user requirement, and are not limited in the embodiment of the present disclosure. For example, the first preset threshold may be 1 meter, 0.5 meter, or the like, the second preset threshold may be 0.1 meter, 0.3 meter, or the like, and the third preset threshold may be 20 meter, 100 meter, or the like.

It should be noted that step 205 to step 207 actually describe a specific implementation of the process of determining, by the terminal for each frame of point cloud data, a pose offset of the frame of point cloud data according to the first coordinates and the second coordinates of the surface feature element. However, the foregoing specific implementation may be replaced with another implementation, and in the foregoing specific implementation, the second coordinates in the vehicle coordinate system are converted into the coordinates in the laser coordinate system, and the pose offset of each frame of point cloud data is determined according to the first coordinates and the third coordinates obtained after the conversion. In an actual operation, the terminal may convert the first coordinates in the laser coordinate system into the coordinates in the vehicle coordinate system to obtain the fourth coordinates obtained after the conversion, and determine the pose offset of each frame of point cloud data according to the second coordinates and the fourth coordinates obtained after the conversion. This is not limited in the embodiment of the present disclosure.

In step 208, the terminal establishes an observation equation between pose offsets of the at least two frames of point cloud data, a position offset, a yaw angle, and a system deviation, and the terminal obtains, for each frame of point cloud data, a heading angle of a vehicle that corresponds to each frame of point cloud data.

In the embodiment of the present disclosure, a laser extrinsic parameter of the laser scanning device includes the position offset and the yaw angle between the vehicle coordinate system and the laser coordinate system. In step 203 and step 204, since the system deviation exists in the map data, there is a deviation between the second coordinates of the surface feature element and actual coordinates of the surface feature element in the vehicle coordinate system. In determining the pose offset of each frame of point cloud data, impact of the system deviation on the second coordinates is considered. Therefore, in this step, when establishing the observation equation, the terminal also requires to consider the impact of the system deviation.

In this step, the terminal establishes the following observation equation according to the pose offset of the at least two frames of point cloud data, the position offset, the yaw angle, and the system deviation:

$$\begin{cases} dx_i' = x_0 \cdot \cos(yaw_i - dyaw) - y_0 \cdot \sin(yaw_i - dyaw) + dx \\ dy_i' = -x_0 \cdot \sin(yaw_i - dyaw) - y_0 \cdot \cos(yaw_i - dyaw) + dy \\ \qquad\qquad dyaw_i' = dyaw \end{cases}, \ i=1,$$

$$2, \ldots, k,$$

the system deviation being $(x_0, y_0)$, the position offset being $(dx, dy)$, the yaw angle being dyaw, ($dx_i', dy_i'$) indicate a value of a position offset of an i-th frame of point cloud data in the at least two frames of point cloud data, dyaw' indicates a value of a yaw angle of the i-th frame of point cloud data in the at least two frames of point cloud data, $yaw_i$ indicates a heading angle corresponding to the i-th frame of point cloud data in the at least two frames of point cloud data, and k indicates the number of frames of the point cloud data.

It should be noted that in the laser coordinate system, the system deviation may be converted into a projection in the direction of the x axis and a projection in the direction of y axis. Since the system deviation is an error in the map data, in an actual operation, coordinates are converted into coordinates in the vehicle coordinate system through the topocentric coordinate system. In both the topocentric coordinate system and the vehicle coordinate system, the vehicle functions as the coordinate origin. The topocentric coordinate system differs from the vehicle coordinate system in positive directions of the x axis and the y axis. An included angle between the positive direction of the y axis of the topocentric coordinate system and the positive direction of the x axis of the vehicle coordinate system is equal to the heading angle of the vehicle.

Therefore, for each frame of point cloud data, the terminal further requires to obtain the heading angle of the vehicle that corresponds to the frame of point cloud data, and the process may include: obtaining, by the terminal, the heading angle of the vehicle that corresponds to the frame of point cloud data by using the IMU in the navigation system when the terminal obtains each frame of point cloud data.

In step 209, the terminal calculates a value of the position offset and a value of the yaw angle in the observation equation according to the heading angle and the pose offset of each frame of point cloud data.

In this step, the terminal may substitute the pose offsets of the at least two frames of point cloud data into the observation equation, so as to calculate the value of the position offset, the value of the yaw angle, and the value of the system deviation in the observation equation according to the pose offsets of the at least two frames of point cloud data.

Theoretically, the value of the position offset, the value of the yaw angle, and the value of the system deviation in the observation equation can be determined only according to the pose offsets of the at least two frames of point cloud data. However, to reduce impact of random noise and to obtain a value of a more robust laser extrinsic parameter, in the embodiment of the present disclosure, the terminal may obtain pose offsets of n frames of point cloud data (n being a positive integer greater than 2), and a heading angle of the vehicle that corresponds to each frame of point cloud data in the pose offsets of the n frames of point cloud data; substitute a pose offset of each frame of cloud data and a corresponding heading angle into the observation equation, and calculate, by using a least square method, the value of the position offset, the value of the yaw angle, and the value of the system deviation in the observation equation. Interference of the random noise that may exist in each frame of point cloud data is reduced by using the pose offsets of the n frames of point cloud data, and an error is reduced, so that a value of the determined laser extrinsic parameter is more accurate.

It should be noted that step 208 and step 209 actually describe a specific implementation of the process of calculating, by the terminal, the value of the laser extrinsic parameter of the laser scanning device according to the pose offsets of the at least two frames of point cloud data, to calibrate the laser scanning device. However, the foregoing specific implementation may be replaced with another implementation, and in the foregoing specific implementation, the value of the laser extrinsic parameter is determined by establishing the observation equation between the pose offset, the position offset, the yaw angle, and the system deviation. In an actual operation, the terminal may pre-establish and pre-store the observation equation, or pre-write and pre-store program instructions having a same function as the observation equation. The terminal determines the value of the laser extrinsic parameter by directly obtaining the observation equation; or directly obtains and executes the program instructions, thereby determining the value of the laser extrinsic parameter.

After determining the value of the laser extrinsic parameter, the terminal calibrates the laser scanning device in the vehicle by using the value of the laser extrinsic parameter, and calibrates the navigation system by using the determined value of the system deviation, so that the vehicle travels with reference to the point cloud data provided by the calibrated laser scanning device and the map data provided by the calibrated navigation system, thereby improving driving safety.

In the embodiment of the present disclosure, the terminal may obtain, based on the at least two frames of point cloud data obtained by the laser scanning device by scanning the target region, the first coordinates of the surface feature element in each frame of point cloud data. The first coordinates are the coordinates of the surface feature element in the laser coordinate system. In addition, the terminal directly determines, based on the map data of the target region of the vehicle, the second coordinates of the surface feature element in each frame of point cloud data in the vehicle coordinate system, thereby directly performing the subsequent process according to the first coordinates and the second coordinates. A Process of manually establishing a calibration field and a manual measurement process are omitted, and efficiency for determining the first coordinates and the second coordinates is improved, thereby improving efficiency for calibrating the laser scanning device. In addition, the terminal determines, for each frame of point cloud data, the pose offset of each frame of point cloud data according to the first coordinates and the second coordinates of the surface feature element; and subsequently calculates the value of the laser extrinsic parameter of the laser scanning device according to the pose offsets of the at least two frames of point cloud data, to calibrate the laser scanning device in the vehicle. The terminal calculates the value of the laser extrinsic parameter of the laser scanning device according to multiple frames of point cloud data. Therefore, interference of random noise in each frame of point cloud data is reduced, thereby reducing an error, and improving accuracy of the determined laser extrinsic parameter.

FIG. 6 is a schematic structural diagram of an apparatus for calibrating a laser scanning device according to an embodiment of the present disclosure. Referring to FIG. 6, the apparatus includes an obtaining module 601, a first determining module 602, a second determining module 603, and a calculation module 604.

The obtaining module 601 is configured to obtain, based on at least two frames of point cloud data obtained by a laser scanning device by scanning a target region, first coordinates of a surface feature element in each frame of point cloud data. The first coordinates are coordinates of the surface feature element in a laser coordinate system.

The first determining module 602 is configured to determine, based on map data of the target region of a vehicle, second coordinates of the surface feature element in each frame of point cloud data in a vehicle coordinate system.

The second determining module 603 is configured to determine, for each frame of point cloud data, a pose offset of each frame of point cloud data according to the first coordinates and the second coordinates of the surface feature element.

The calculation module 604 is configured to calculate a value of a laser extrinsic parameter of the laser scanning device according to pose offsets of the at least two frames of point cloud data, to calibrate the laser scanning device.

Optionally, the obtaining module 601 includes a scanning unit and an extraction unit.

The scanning unit is configured to scan the target region based on a preset scanning route by using the laser scanning device, to obtain the at least two frames of point cloud data. The target region is any region including the surface feature element.

The extraction unit is configured to extract, for each frame of point cloud data, the first coordinates of the surface feature element in the laser coordinate system.

Optionally, the first determining module 602 includes a first obtaining unit and a first determining unit.

The first obtaining unit is configured to obtain the map data of the target region from a navigation system of the vehicle. The map data includes longitude and latitude coordinates and an elevation coordinate of the surface feature element in a map coordinate system.

The first determining unit is configured to determine, for each frame of point cloud data according to the map data of the target region, the second coordinates of the surface feature element in the vehicle coordinate system.

Optionally, the second determining module 603 includes a second obtaining unit, a second determining unit and a third determining unit.

The second obtaining unit is configured to obtain an initial pose offset between the vehicle coordinate system and the laser coordinate system.

The second determining unit is configured to determine, for each frame of point cloud data, third coordinates of the surface feature element according to the initial pose offset and the second coordinates of the surface feature element. The third coordinates are coordinates of the surface feature element in the laser coordinate system.

The third determining unit is configured to determine the pose offset of each frame of point cloud data according to the first coordinates and the third coordinates of the surface feature element.

Optionally, the third determining unit includes a calculation subunit and a determining subunit.

The calculation subunit is configured to calculate a first distance between each first dotted element and a neighboring second dotted element and a second distance between each first dotted element and a neighboring linear element according to the first coordinates and the third coordinates of the surface feature element. The first dotted element is a dotted element in the surface feature element that corresponds to the first coordinates, the second dotted element is a dotted element in the surface feature element that corresponds to the third coordinates, and the linear element is a linear element in the surface feature element that corresponds to the third coordinates.

The determining subunit is configured to determine the pose offset of each frame of point cloud data according to the first distance and the second distance.

Optionally, the laser extrinsic parameter of the laser scanning device includes a position offset and a yaw angle between the vehicle coordinate system and the laser coordinate system, and the calculation module 604 includes an establishment unit, a third obtaining unit and a calculation unit.

The establishment unit is configured to establish an observation equation between the pose offsets of the at least two frames of point cloud data, the position offset, the yaw angle, and a system deviation. The system deviation indicates a deviation between the navigation system of the vehicle and the map data.

The third obtaining unit is configured to obtain, for each frame of point cloud data, a heading angle of the vehicle that corresponds to the frame of point cloud data.

The calculation unit is configured to calculate a value of the position offset and a value of the yaw angle in the observation equation according to the heading angle and the pose offset of the frame of point cloud data.

In the embodiment of the present disclosure, the terminal may obtain, based on the at least two frames of point cloud data obtained by the laser scanning device by scanning the target region, the first coordinates of the surface feature element in each frame of point cloud data. The first coordinates are the coordinates of the surface feature element in the laser coordinate system. In addition, the terminal directly determines, based on the map data of the target region of the vehicle, the second coordinates of the surface feature element in each frame of point cloud data in the vehicle coordinate system, thereby directly performing the subsequent process according to the first coordinates and the second coordinates. A Process of manually establishing a calibration field and a manual measurement process are omitted, and efficiency for determining the first coordinates and the second coordinates is improved, thereby improving efficiency for calibrating the laser scanning device. In addition, the terminal determines, for each frame of point cloud data, the pose offset of each frame of point cloud data according to the first coordinates and the second coordinates of the surface feature element; and subsequently calculates the value of the laser extrinsic parameter of the laser scanning device according to the pose offsets of the at least two frames of point cloud data, to calibrate the laser scanning device in the vehicle. The terminal calculates the value of the laser extrinsic parameter of the laser scanning device according to the multiple frames of point cloud data. Therefore, interference of random noise in each frame of point cloud data is reduced, and an error is reduced, thereby improving accuracy of determining the laser extrinsic parameter.

It should be noted that division of the foregoing functional modules is only described for exemplary purposes when the apparatus for calibrating a laser scanning device provided in the foregoing embodiment calibrates a laser scanning device. In an actual application, the foregoing functions may be allocated to different functional modules according to requirements, that is, the terminal is divided into different functional modules, to accomplish all or a part of the above described functions. In addition, an inventive concept of the apparatus for calibrating a laser scanning device provided in the foregoing embodiment is the same as that of the method for calibrating a laser scanning device. For a specific implementation process, one may refer to the description of the method embodiments, and details are not described herein again.

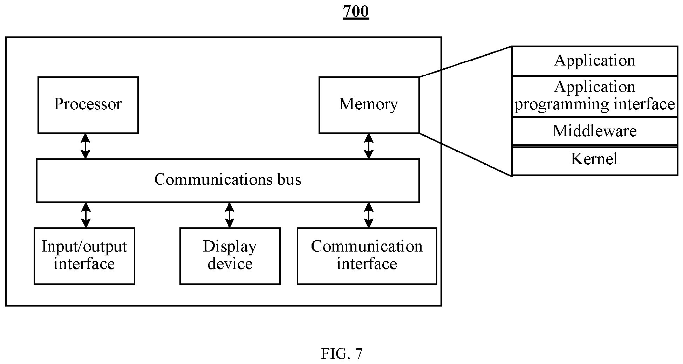

FIG. 7 is a schematic structural diagram of a computer device 700 according to an embodiment of the present disclosure. Referring to FIG. 7, the computer device 700 includes a processor and a memory, and may further include a communication interface, a communication bus, an input/output interface and a display device. The processor, the memory, the input/output interface, the display device, and the communications interface communicate with each other via the communications bus. The memory includes a non-volatile storage medium and an internal memory. The non-volatile storage medium of the computer device stores an operating system, and may further store computer readable instructions. The computer readable instructions, when being executed by the processor, cause the processor to implement the method for calibrating a laser scanning device. The internal memory may also store computer readable instructions. The computer readable instructions, when being executed by the processor, cause the processor to perform the method for calibrating a laser scanning device.

The communications bus is a circuit connecting the described elements and implements transmission between the elements. For example, the processor receives a command from another element via the communications bus, decrypts the received command, and performs calculation or data processing according to the decrypted command. The memory may include a program module, for example a kernel, a middleware, an application programming interface (API), and an application. The program module may include software, firmware, or hardware, or at least two thereof. The input/output interface forwards a command or data inputted by a user by using an input/output device (for example, a sensor, a keyboard, or a touchscreen). The display device displays various types of information to the user. The communication interface connects the computer device 700 to another network device, user equipment, and a network. For example, the communication interface may connect to a network in a wired or wireless manner, to connect to another external network device or user equipment. The wireless communication may include at least one of the following: wireless fidelity (Wi-Fi), Bluetooth (BT), a near field communication technology (NFC), a Global Positioning System (GPS), and cellular communication (for example, Long Term Evolution (LTE), Long Term Evolution-Advanced (LTE-A), Code Division Multiple Access (CDMA), Wideband Code Division Multiple Access (WCDMA), Universal Mobile Telecommunication System (UMTS), Wireless Broadband (WiBro), and Global System for Mobile Communications (GSM)). The wired communication may include at least one of the following: a universal serial bus (USB), a high definition multimedia interface (HDMI), an asynchronous transmission standard interface (Recommended Standard 232 (RS-232)), and a plain old telephone service (POTS). The network may be a telecommunication network or a communication network. The communications network may be a computer network, the Internet, the Internet of Things, or a telephone network. The computer device 700 may connect to the network via the communications interface. A protocol with which the computer device 700 communicates with another network device, may be supported by at least one of the application, the API, the middleware, the kernel, and the communications interface.

In an exemplary embodiment, a computer readable storage medium storing a computer program is further provided, for example, a memory storing computer readable instructions. The computer readable instructions, when being executed by a processor, implement the method for calibrating a laser scanning device in the foregoing embodiment. For example, the computer readable storage medium may be a read-only memory (ROM), a random access memory (RAM), a compact disc read-only memory (CD-ROM), a magnetic tape, a floppy disk, an optical data storage device, or the like.

A person of ordinary skill in the art may understand that all or some of the steps of the foregoing embodiments may be implemented by hardware, or may be implemented by a program instructing relevant hardware. The program may be stored in a computer readable storage medium. The storage medium may be a read-only memory, a magnetic disk, an optical disc, or the like.

Only preferred embodiments of the present disclosure are described above, and are not intended to limit the present disclosure.

**Claims**

1. A method for calibrating a laser scanning device (101) installed in a vehicle, applied to a computer device, the method comprising:
   obtaining, based on at least two frames of point cloud data obtained by a laser scanning device (101) by scanning a target region, first coordinates of a surface feature element in each frame of point cloud data, wherein the first coordinates are coordinates of the surface feature element in a laser coordinate system, the surface element being an object having a fixed position in the target region and functioning as a basic element of a calibration point;
   **characterized in that** the method further comprises:

   determining, based on map data of the target region including longitude and latitude coordinates and an elevation coordinate of the surface feature element in a map coordinate system, second coordinates of the surface feature element in each frame of point cloud data in a vehicle coordinate system by obtaining position coordinates of the surface feature element included in each of the frames of point cloud data in the map coordinate system by using the map data, and by converting the obtained position coordinates into the second coordinates in the vehicle coordinate system using position coordinates of the vehicle in the map coordinate system;
   determining, for each frame of point cloud data, a pose offset of each frame of point cloud data based on the first coordinates and the second coordinates of the surface feature element, the pose offset including a value of a position offset and a value of a yaw angle between the vehicle coordinate system and the laser coordinate system for each frame of point cloud data; and
   calculating a value of a laser extrinsic parameter of the laser scanning device (101), including a position offset and a yaw angle between the vehicle coordinate system and the laser coordinate system, based on pose offsets of the at least two frames of point cloud data, to calibrate the laser scanning device (101).

2. The method according to claim 1, wherein the obtaining, based on at least two frames of point cloud data obtained by a laser scanning device (101) by scanning a target region, first coordinates of a surface feature element in each frame of point cloud data comprises:

scanning the target region based on a preset scanning route by using the laser scanning device (101), to obtain the at least two frames of point cloud data, wherein the target region is any region comprising the surface feature element; and

extracting, for each frame of point cloud data, the first coordinates of the surface feature element in the laser coordinate system.

3. The method according to claim 1, wherein the determining, for each frame of point cloud data according to the map data of the target region, the second coordinates of the surface feature element in the vehicle coordinate system comprises:

converting the longitude and latitude coordinates and the elevation coordinate of the surface feature element in the map coordinate system into position coordinates in a geocentric coordinate system;

converting the position coordinates of the surface feature element in the geocentric coordinate system into position coordinates in a topocentric coordinate system; and

converting the position coordinates of the surface feature element in the topocentric coordinate system into the second coordinates in the vehicle coordinate system according to an obtained heading angle of a vehicle.

4. The method according to claim 1, wherein the determining, for each frame of point cloud data, a pose offset of each frame of point cloud data based on the first coordinates and the second coordinates of the surface feature element comprises:

obtaining an initial pose offset between the vehicle coordinate system and the laser coordinate system;

determining, for each frame of point cloud data, third coordinates of the surface feature element according to the initial pose offset and the second coordinates of the surface feature element, wherein the third coordinates are coordinates of the surface feature element in the laser coordinate system; and

determining the pose offset of each frame of point cloud data according to the first coordinates and the third coordinates of the surface feature element.

5. The method according to claim 4, wherein the determining, for each frame of point cloud data, third coordinates of the surface feature element according to the initial pose offset and the second coordinates of the surface feature element comprises:

performing, for each frame of point cloud data, position offsetting on the second coordinates of the surface feature element according to a value of an initial position offset in the initial pose offset, and performing, according to a value of an initial yaw angle in the initial pose offset, angle offsetting on the second coordinates subjected to the position offsetting; and

using position coordinates obtained after performing the position offsetting and the angle offsetting as the third coordinates of the surface feature element.

6. The method according to claim 4, wherein the determining the pose offset of each frame of point cloud data according to the first coordinates and the third coordinates of the surface feature element comprises:

calculating a first distance between each first point and a neighboring second point and a second distance between each first point and a neighboring linear element according to the first coordinates and the third coordinates of the surface feature element, wherein the first point is a point in the surface feature element that corresponds to the first coordinates, the second point is a point in the surface feature element that corresponds to the third coordinates, and the linear element is a linear element in the surface feature element and that corresponds to the third coordinates; and

determining the pose offset of each frame of point cloud data according to the first distance and the second distance.

7. The method according to claim 1, wherein the calculating a value of a laser extrinsic parameter of the laser scanning device (101) according to pose offsets of the at least two frames of point cloud data comprises:

> establishing an observation equation between the pose offsets of the at least two frames of point cloud data, the position offset, the yaw angle, and a system deviation, wherein the system deviation indicates a system error in the map data;
> obtaining, for each frame of point cloud data, a heading angle of the vehicle that corresponds to each frame of point cloud data; and
> calculating a value of the position offset and a value of the yaw angle in the observation equation according to the heading angle and the pose offset of each frame of point cloud data.

8. A computer device, comprising a memory and a processor, wherein the memory stores computer readable instructions, **characterized in that** the computer readable instructions, when being executed by the processor, cause the processor to perform a plurality of operations comprising:
obtaining, based on at least two frames of point cloud data obtained by a laser scanning device (101) installed in a vehicle by scanning a target region, first coordinates of a surface feature element in each frame of point cloud data, wherein the first coordinates are coordinates of the surface feature element in a laser coordinate system, the surface element being an object having a fixed position in the target region and functioning as a basic element of a calibration point;
**characterized by** the plurality of operations further comprising:

> determining, based on map data of the target region including longitude and latitude coordinates and an elevation coordinate of the surface feature element in a map coordinate system, second coordinates of the surface feature element in each frame of point cloud data in a vehicle coordinate system by obtaining position coordinates of the surface feature element included in each of the frames of point cloud data in the map coordinate system by using the map data, and by converting the obtained position coordinates into the second coordinates in the vehicle coordinate system using position coordinates of the vehicle in the map coordinate system;
> determining, for each frame of point cloud data, a pose offset of each frame of point cloud data based on the first coordinates and the second coordinates of the surface feature element, the pose offset including a value of a position offset and a value of a yaw angle between the vehicle coordinate system and the laser coordinate system for each frame of point cloud data; and
> calculating a value of a laser extrinsic parameter, including a position offset and a yaw angle between the laser coordinate system and the vehicle coordinate system, of the laser scanning device (101) according to pose offsets of the at least two frames of point cloud data, to calibrate the laser scanning device (101).

9. The computer device according to claim 8, wherein the operation of obtaining, based on at least two frames of point cloud data obtained by a laser scanning device (101) by scanning a target region, first coordinates of a surface feature element in each frame of point cloud data comprises:

> scanning the target region based on a preset scanning route by using the laser scanning device (101), to obtain the at least two frames of point cloud data, wherein the target region is any region comprising the surface feature element; and
> extracting, for each frame of point cloud data, the first coordinates of the surface feature element in the laser coordinate system.

10. The computer device according to claim 8, wherein the operation of determining, for each frame of point cloud data, a pose offset of each frame of point cloud data according to the first coordinates and the second coordinates of the surface feature element comprises:

> obtaining an initial pose offset between the vehicle coordinate system and the laser coordinate system;
> determining, for each frame of point cloud data, third coordinates of the surface feature element according to the initial pose offset and the second coordinates of the surface feature element, wherein the third coordinates are coordinates of the surface feature element in the laser coordinate system; and
> determining the pose offset of each frame of point cloud data according to the first coordinates and the third coordinates of the surface feature element.

11. The computer device according to claim 10, wherein the operation of determining the pose offset of each frame of point cloud data according to the first coordinates and the third coordinates of the surface feature element comprises:

EP 3 686 557 B1

calculating a first distance between each first point and a neighboring second point and a second distance between each first point and a neighboring linear element according to the first coordinates and the third coordinates of the surface feature element, wherein the first point is a point in the surface feature element that corresponds to the first coordinates, the second point is a point in the surface feature element that corresponds to the third coordinates, and the linear element is a linear element in the surface feature element that corresponds to the third coordinates; and
determining the pose offset of each frame of point cloud data according to the first distance and the second distance.

12. The computer device according to claim 8, wherein the operation of calculating a value of a laser extrinsic parameter of the laser scanning device (101) according to pose offsets of the at least two frames of point cloud data comprises:

establishing an observation equation between the pose offsets of the at least two frames of point cloud data, the position offset, the yaw angle, and a system deviation, wherein the system deviation indicates a system error in the map data;
obtaining, for each frame of point cloud data, a heading angle of the vehicle that corresponds to each frame of point cloud data; and
calculating a value of the position offset and a value of the yaw angle in the observation equation according to the heading angle and the pose offset of each frame of point cloud data.

13. A non-volatile computer readable storage medium storing computer readable instructions, wherein the computer readable instructions, when being executed by one or more processors, cause the one or more processors to perform the method for calibrating a laser scanning device (101) according to any one of claims 1 to 7.

**Patentansprüche**

1. Verfahren zum Kalibrieren einer in einem Fahrzeug installierten Laserscanvorrichtung (101), das auf eine Computervorrichtung angewendet wird, wobei das Verfahren umfasst:

Erhalten, basierend auf mindestens zwei Frames von Punktclouddaten, die durch eine Laserscanvorrichtung (101) durch Scannen eines Zielbereichs erhalten werden, erster Koordinaten eines Oberflächenmerkmalelements in jedem Frame von Punktclouddaten, wobei die ersten Koordinaten Koordinaten des Oberflächenmerkmalelements in einem Laserkoordinatensystem sind, wobei das Oberflächenelement ein Objekt mit einer festen Position in dem Zielbereich ist und als ein Grundelement eines Kalibrierungspunkts funktioniert;
**dadurch gekennzeichnet, dass** das Verfahren ferner umfasst:

Bestimmen, basierend auf Kartendaten des Zielbereichs, die Längen- und Breitengradkoordinaten und eine Höhenkoordinate des Oberflächenmerkmalelements in einem Kartenkoordinatensystem enthalten, von zweiten Koordinaten des Oberflächenmerkmalelements in jedem Frame von Punktclouddaten in einem Fahrzeugkoordinatensystem durch Erhalten von Positionskoordinaten des Oberflächenmerkmalelements, die in jedem der Frames von Punktclouddaten in dem Kartenkoordinatensystem enthalten sind, unter Verwendung der Kartendaten, und durch Umwandeln der erhaltenen Positionskoordinaten in die zweiten Koordinaten im Fahrzeugkoordinatensystem unter Verwendung von Positionskoordinaten des Fahrzeugs im Kartenkoordinatensystem;
Bestimmen, für jeden Frame von Punktclouddaten, eines Lageversatzes jedes Frames von Punktclouddaten, basierend auf den ersten Koordinaten und den zweiten Koordinaten des Oberflächenmerkmalelements, wobei der Lageversatz einen Wert eines Positionsversatzes und einen Wert eines Gierwinkels zwischen dem Fahrzeugkoordinatensystem und dem Laserkoordinatensystem für jeden Frame von Punktclouddaten umfasst; und
Berechnen eines Werts eines extrinsischen Laserparameters der Laserscanvorrichtung (101), enthaltend einen Positionsversatz und einen Gierwinkel zwischen dem Fahrzeugkoordinatensystem und dem Laserkoordinatensystem, basierend auf Lageversätzen der mindestens zwei Frames von Punktclouddaten, um die Laserscanvorrichtung (101) zu kalibrieren.

2. Verfahren gemäß Anspruch 1, wobei das Erhalten erster Koordinaten eines Oberflächenmerkmalelements in jedem Frame von Punktclouddaten basierend auf mindestens zwei Frames von Punktclouddaten, die durch eine Laserscanvorrichtung (101) durch Scannen eines Zielbereichs erhalten werden, umfasst:

Scannen des Zielbereichs basierend auf einer voreingestellten Scanroute unter Verwendung der Laserscanvorrichtung (101), um die mindestens zwei Frames von Punktclouddaten zu erhalten, wobei der Zielbereich ein beliebiger Bereich ist, der das Oberflächenmerkmalelement umfasst; und

Extrahieren der ersten Koordinaten des Oberflächenmerkmalelements in dem Laserkoordinatensystem für jeden Frame von Punktclouddaten.

3. Verfahren gemäß Anspruch 1, wobei das Bestimmen der zweiten Koordinaten des Oberflächenmerkmalelements im Fahrzeugkoordinatensystem für jeden Frame von Punktclouddaten gemäß den Kartendaten des Zielbereichs umfasst:

Umwandeln der Längen- und Breitengradkoordinaten und der Höhenkoordinate des Oberflächenmerkmalements im Kartenkoordinatensystem in Positionskoordinaten in einem geozentrischen Koordinatensystem;
Umwandeln der Positionskoordinaten des Oberflächenmerkmalelements im geozentrischen Koordinatensystem in Positionskoordinaten in einem topozentrischen Koordinatensystem; und
Umwandeln der Positionskoordinaten des Oberflächenmerkmalelements im topozentrischen Koordinatensystem in die zweiten Koordinaten im Fahrzeugkoordinatensystem gemäß einem erhaltenen Kurswinkel eines Fahrzeugs.

4. Verfahren gemäß Anspruch 1, wobei das Bestimmen eines Lageversatzes jedes Frames von Punktclouddaten basierend auf den ersten Koordinaten und den zweiten Koordinaten des Oberflächenmerkmalelements für jeden Frame von Punktclouddaten umfasst:

Erhalten eines anfänglichen Lageversatzes zwischen dem Fahrzeugkoordinatensystem und dem Laserkoordinatensystem;
Bestimmen von dritten Koordinaten des Oberflächenmerkmalelements für jeden Frame von Punktclouddaten gemäß dem anfänglichen Lageversatz und den zweiten Koordinaten des Oberflächenmerkmalelements, wobei die dritten Koordinaten Koordinaten des Oberflächenmerkmalelements in dem Laserkoordinatensystem sind; und
Bestimmen des Lageversatzes jedes Frames von Punktclouddaten gemäß den ersten Koordinaten und den dritten Koordinaten des Oberflächenmerkmalelements.

5. Verfahren gemäß Anspruch 4, wobei das Bestimmen der dritten Koordinaten des Oberflächenmerkmalelements für jeden Frame von Punktclouddaten gemäß dem anfänglichen Lageversatz und der zweiten Koordinaten des Oberflächenmerkmalelements umfasst:

Durchführen einer Positionsverschiebung der zweiten Koordinaten des Oberflächenmerkmalelements für jeden Frame von Punktclouddaten gemäß einem Wert eines anfänglichen Positionsversatzes in dem anfänglichen Lageversatz und Durchführen einer Winkelverschiebung der zweiten Koordinaten, die der Positionsverschiebung unterzogen wurden gemäß einem Wert eines anfänglichen Gierwinkels in dem anfänglichen Lageversatz; und
Nutzen von Positionskoordinaten, die nach der Durchführung der Positionsverschiebung und der Winkelverschiebung erhalten wurden, als die dritten Koordinaten des Oberflächenmerkmalelements.

6. Verfahren gemäß Anspruch 4, wobei das Bestimmen des Lageversatzes jedes Frames von Punktclouddaten gemäß den ersten Koordinaten und den dritten Koordinaten des Oberflächenmerkmalelements umfasst:

Berechnen eines ersten Abstands zwischen jedem ersten Punkt und einem benachbarten zweiten Punkt und eines zweiten Abstands zwischen jedem ersten Punkt und einem benachbarten linearen Element gemäß den ersten Koordinaten und den dritten Koordinaten des Oberflächenmerkmalelements, wobei der erste Punkt ein Punkt in dem Oberflächenmerkmalelement ist, der den ersten Koordinaten entspricht, der zweite Punkt ein Punkt in dem Oberflächenmerkmalelement ist, der den dritten Koordinaten entspricht, und das lineare Element ein lineares Element in dem Oberflächenmerkmalelement ist und das den dritten Koordinaten entspricht; und
Bestimmen des Lageversatzes jedes Frames von Punktclouddaten gemäß dem ersten Abstand und dem zweiten Abstand.

7. Verfahren gemäß Anspruch 1, wobei das Berechnen eines Wertes eines extrinsischen Laserparameters der Laserscanvorrichtung (101) gemäß den Lageversätzen der mindestens zwei Frames von Punktclouddaten umfasst:

Aufstellen einer Beobachtungsgleichung zwischen den Lageversätzen der mindestens zwei Frames von Punktclouddaten, dem Positionsversatz, dem Gierwinkel und einer Systemabweichung, wobei die Systemabweichung einen Systemfehler in den Kartendaten angibt;

Erhalten eines Kurswinkels des Fahrzeugs, der jedem Frame von Punktclouddaten entspricht, für jeden Frame von Punktclouddaten; und

Berechnen eines Wertes des Positionsversatzes und eines Wertes des Gierwinkels in der Beobachtungsgleichung gemäß dem Kurswinkel und dem Lageversatz jedes Frames von Punktclouddaten.

8. Computervorrichtung umfassend einen Speicher und einen Prozessor, wobei der Speicher computerlesbare Anweisungen speichert, **dadurch gekennzeichnet, dass** die computerlesbaren Anweisungen, wenn sie durch den Prozessor ausgeführt werden, den Prozessor veranlassen, eine Vielzahl von Vorgängen auszuführen, umfassend:

Erhalten, basierend auf mindestens zwei Frames von Punktclouddaten, die durch eine in einem Fahrzeug installierte Laserscanvorrichtung (101) durch Scannen eines Zielbereichs erhalten werden, erster Koordinaten eines Oberflächenmerkmalelements in jedem Frame von Punktclouddaten, wobei die ersten Koordinaten Koordinaten des Oberflächenmerkmalelements in einem Laserkoordinatensystem sind, wobei das Oberflächenelement ein Objekt mit einer festen Position in dem Zielbereich ist und als ein Grundelement eines Kalibrierungspunkts funktioniert;

**dadurch gekennzeichnet, dass** die Vielzahl von Vorgängen ferner umfasst:

Bestimmen, basierend auf Kartendaten des Zielgebiets, die Längen- und Breitengradkoordinaten und eine Höhenkoordinate des Oberflächenmerkmalelements in einem Kartenkoordinatensystem enthalten, von zweiten Koordinaten des Oberflächenmerkmalelements in jedem Frame von Punktclouddaten in einem Fahrzeugkoordinatensystem durch Erhalten von Positionskoordinaten des Oberflächenmerkmalelements, die in jedem der Frames von Punktclouddaten in dem Kartenkoordinatensystem enthalten sind, unter Verwendung der Kartendaten, und durch Umwandeln der erhaltenen Positionskoordinaten in die zweiten Koordinaten im Fahrzeugkoordinatensystem unter Verwendung von Positionskoordinaten des Fahrzeugs im Kartenkoordinatensystem;

Bestimmen, für jeden Frame von Punktclouddaten, eines Lageversatzes jedes Frames von Punktclouddaten, basierend auf den ersten Koordinaten und den zweiten Koordinaten des Oberflächenmerkmalelements, wobei der Lageversatz einen Wert eines Positionsversatzes und einen Wert eines Gierwinkels zwischen dem Fahrzeugkoordinatensystem und dem Laserkoordinatensystem für jeden Frame von Punktclouddaten umfasst; und

Berechnen eines Werts eines extrinsischen Laserparameters der Laserscanvorrichtung (101), enthaltend einen Positionsversatz und einen Gierwinkel zwischen dem Laserkoordinatensystem und dem Fahrzeugkoordinatensystem, gemäß den Lageversätzen der mindestens zwei Frames von Punktclouddaten, um die Laserscanvorrichtung (101) zu kalibrieren.

9. Computervorrichtung gemäß Anspruch 8, wobei der Vorgang des Erhaltens von ersten Koordinaten eines Oberflächenmerkmalelements in jedem Frame von Punktclouddaten basierend auf mindestens zwei Frames von Punktclouddaten, die durch eine Laserscanvorrichtung (101) durch Scannen eines Zielbereichs erhalten werden, umfasst:

Scannen des Zielbereichs basierend auf einer voreingestellten Scanroute unter Verwendung der Laserscanvorrichtung (101), um die mindestens zwei Frames von Punktclouddaten zu erhalten, wobei der Zielbereich ein beliebiger Bereich ist, der das Oberflächenmerkmalelement umfasst; und

Extrahieren der ersten Koordinaten des Oberflächenmerkmalelements in dem Laserkoordinatensystem für jeden Frame von Punktclouddaten.

10. Computervorrichtung gemäß Anspruch 8, wobei der Vorgang des Bestimmens eines Lageversatzes jedes Frames von Punktclouddaten gemäß den ersten Koordinaten und den zweiten Koordinaten des Oberflächenmerkmalelements für jeden Frame von Punktclouddaten umfasst:

Erhalten eines anfänglichen Lageversatzes zwischen dem Fahrzeugkoordinatensystem und dem Laserkoordinatensystem;

Bestimmen von dritten Koordinaten des Oberflächenmerkmalelements für jeden Frame von Punktclouddaten gemäß dem anfänglichen Lageversatz und den zweiten Koordinaten des Oberflächenmerkmalelements, wobei die dritten Koordinaten Koordinaten des Oberflächenmerkmalelements in dem Laserkoordinatensystem sind;

und

Bestimmen des Lageversatzes jedes Frames von Punktclouddaten gemäß den ersten Koordinaten und den dritten Koordinaten des Oberflächenmerkmalelements.

11. Computervorrichtung gemäß Anspruch 10, wobei der Vorgang des Bestimmens des Lageversatzes jedes Frames von Punktclouddaten gemäß den ersten Koordinaten und den dritten Koordinaten des Oberflächenmerkmalelements umfasst:

Berechnen eines ersten Abstands zwischen jedem ersten Punkt und einem benachbarten zweiten Punkt und eines zweiten Abstands zwischen jedem ersten Punkt und einem benachbarten linearen Element gemäß den ersten Koordinaten und den dritten Koordinaten des Oberflächenmerkmalelements, wobei der erste Punkt ein Punkt in dem Oberflächenmerkmalelement ist, der den ersten Koordinaten entspricht, der zweite Punkt ein Punkt in dem Oberflächenmerkmalelement ist, der den dritten Koordinaten entspricht, und das lineare Element ein lineares Element in dem Oberflächenmerkmalelement ist, das den dritten Koordinaten entspricht; und
Bestimmen des Lageversatzes jedes Frames von Punktclouddaten gemäß dem ersten Abstand und dem zweiten Abstand.

12. Computervorrichtung gemäß Anspruch 8, wobei der Vorgang des Berechnens eines Wertes eines extrinsischen Laserparameters der Laserscanvorrichtung (101) gemäß den Lageversätzen der mindestens zwei Frames von Punktclouddaten umfasst:

Aufstellen einer Beobachtungsgleichung zwischen den Lageversätzen der mindestens zwei Frames von Punktclouddaten, dem Positionsversatz, dem Gierwinkel und einer Systemabweichung, wobei die Systemabweichung einen Systemfehler in den Kartendaten angibt;
Erhalten eines Kurswinkels des Fahrzeugs, der jedem Frame von Punktclouddaten entspricht, für jeden Frame von Punktclouddaten; und
Berechnen eines Werts des Positionsversatzes und eines Werts des Gierwinkels in der Beobachtungsgleichung gemäß dem Kurswinkel und dem Lageversatz jedes Frames von Punktclouddaten.

13. Nichtflüchtiges computerlesbares Speichermedium, das computerlesbare Anweisungen speichert, wobei die computerlesbaren Anweisungen, wenn sie von einem oder mehreren Prozessoren ausgeführt werden, den einen oder die mehreren Prozessoren veranlassen, das Verfahren zum Kalibrieren einer Laserscanvorrichtung (101) gemäß einem der Ansprüche 1 bis 7 auszuführen.

## Revendications

1. Procédé d'étalonnage d'un dispositif de balayage laser (101) installé dans un véhicule, appliqué à un dispositif informatique, le procédé comprenant :

l'obention, sur la base d'au moins deux trames de données de nuage de points obtenues par un dispositif de balayage laser (101) par balayage d'une région cible, de premières coordonnées d'un élément de caractéristique de surface dans chaque trame de données de nuage de points, les premières coordonnées étant des coordonnées de l'élément de caractéristique de surface dans un système de coordonnées laser, l'élément de surface étant un objet présentant une position fixe dans la région cible et fonctionnant en tant qu'élément de base d'un point d'étalonnage ;
**caractérisé en ce que** le procédé comprend en outre :

la détermination, sur la base de données de carte de la région cible comprenant des coordonnées de longitude et de latitude et une coordonnée d'élévation de l'élément de caractéristique de surface dans un système de coordonnées de carte, de deuxièmes coordonnées de l'élément de caractéristique de surface dans chaque trame de données de nuage de points dans un système de coordonnées de véhicule par l'obtention de coordonnées de position de l'élément de caractéristique de surface inclus dans chacune des trames de données de nuage de points dans le système de coordonnées de carte à l'aide des données de carte et par la conversion des coordonnées de position obtenues en deuxièmes coordonnées dans le système de coordonnées de véhicule à l'aide de coordonnées de position du véhicule dans le système de coordonnées de carte ;
la détermination, pour chaque trame de données de nuage de points, d'un décalage de pose de chaque trame de données de nuage de points sur la base des premières coordonnées et des deuxièmes coordonnées de l'élément de caractéristique de surface, le décalage de pose comprenant une valeur d'un décalage de position et une valeur d'un angle de lacet entre le système de coordonnées de véhicule et le système de coordonnées laser pour chaque trame de données de nuage de points ; et

le calcul d'une valeur d'un paramètre extrinsèque laser du dispositif de balayage laser (101), comprenant un décalage de position et un angle de lacet entre le système de coordonnées de véhicule et le système de coordonnées laser, sur la base de décalages de pose desdites au moins deux trames de données de nuage de points, afin d'étalonner le dispositif de balayage laser (101).

2. Procédé selon la revendication 1, dans lequel l'obtention, sur la base d'au moins deux trames de données de nuage de points obtenues par un dispositif de balayage laser (101) par balayage d'une région cible, de premières coordonnées d'un élément de caractéristique de surface dans chaque trame de données de nuage de points comprend :

le balayage de la région cible sur la base d'un trajet de balayage prédéfini à l'aide du dispositif de balayage laser (101), afin d'obtenir lesdites au moins deux trames de données de nuage de points, la région cible étant une région quelconque comprenant l'élément de caractéristique de surface ; et

l'extraction, pour chaque trame de données de nuage de points, des premières coordonnées de l'élément de caractéristique de surface dans le système de coordonnées laser.

3. Procédé selon la revendication 1, dans lequel la détermination, pour chaque trame de données de nuage de points en fonction des données de carte de la région cible, des deuxièmes coordonnées de l'élément de caractéristique de surface dans le système de coordonnées de véhicule comprend :

la conversion des coordonnées de longitude et de latitude et de la coordonnée d'élévation de l'élément de caractéristique de surface dans le système de coordonnées de carte en coordonnées de position dans un système de coordonnées géocentriques ;

la conversion des coordonnées de position de l'élément de caractéristique de surface dans le système de coordonnées géocentriques en coordonnées de position dans un système de coordonnées topocentriques ; et

la conversion des coordonnées de position de l'élément de caractéristique de surface dans le système de coordonnées topocentriques en deuxièmes coordonnées dans le système de coordonnées de véhicule en fonction d'un angle de cap obtenu d'un véhicule.

4. Procédé selon la revendication 1, dans lequel la détermination, pour chaque trame de données de nuage de points, d'un décalage de pose de chaque trame de données de nuage de points sur la base des premières coordonnées et des deuxièmes coordonnées de l'élément de caractéristique de surface comprend :

l'obtention d'un décalage de pose initial entre le système de coordonnées de véhicule et le système de coordonnées laser ;

la détermination, pour chaque trame de données de nuage de points, de troisièmes coordonnées de l'élément de caractéristique de surface en fonction du décalage de pose initial et des deuxièmes coordonnées de l'élément de caractéristique de surface, les troisièmes coordonnées étant des coordonnées de l'élément de caractéristique de surface dans le système de coordonnées laser ; et

la détermination du décalage de pose de chaque trame de données de nuage de points en fonction des premières coordonnées et des troisièmes coordonnées de l'élément de caractéristique de surface.

5. Procédé selon la revendication 4, dans lequel la détermination, pour chaque trame de données de nuage de points, de troisièmes coordonnées de l'élément de caractéristique de surface en fonction du décalage de pose initial et des deuxièmes coordonnées de l'élément de caractéristique de surface comprend :

la réalisation, pour chaque trame de données de nuage de points, d'un décalage de position sur les deuxièmes coordonnées de l'élément de caractéristique de surface en fonction d'une valeur d'un décalage de position initial dans le décalage de pose initial et la réalisation, en fonction d'une valeur d'un angle de lacet initial dans le décalage de pose initial, d'un décalage d'angle sur les deuxièmes coordonnées soumises au décalage de position ; et

l'utilisation de coordonnées de position obtenues après la réalisation du décalage de position et du décalage d'angle en tant que troisièmes coordonnées de l'élément de caractéristique de surface.

**6.** Procédé selon la revendication 4, dans lequel la détermination du décalage de pose de chaque trame de données de nuage de points en fonction des premières coordonnées et des troisièmes coordonnées de l'élément de caractéristique de surface comprend :

le calcul d'une première distance entre chaque premier point et un deuxième point voisin et d'une deuxième distance entre chaque premier point et un élément linéaire voisin en fonction des premières coordonnées et des troisièmes coordonnées de l'élément de caractéristique de surface, le premier point étant un point dans l'élément de caractéristique de surface qui correspond aux premières coordonnées, le deuxième point étant un point dans l'élément de caractéristique de surface qui correspond aux troisièmes coordonnées et l'élément linéaire étant un élément linéaire dans l'élément de caractéristique de surface et qui correspond aux troisièmes coordonnées ; et la détermination du décalage de pose de chaque trame de données de nuage de points en fonction de la première distance et de la deuxième distance.

**7.** Procédé selon la revendication 1, dans lequel le calcul d'une valeur d'un paramètre extrinsèque laser du dispositif de balayage laser (101) en fonction de décalages de pose desdites au moins deux trames de données de nuage de points comprend :

l'établissement d'une équation d'observation entre les décalages de pose desdites au moins deux trames de données de nuage de points, le décalage de position, l'angle de lacet et un écart de système, l'écart de système indiquant une erreur de système dans les données de carte ;
l'obtention, pour chaque trame de données de nuage de points, d'un angle de cap du véhicule qui correspond à chaque trame de données de nuage de points ; et
le calcul d'une valeur du décalage de position et d'une valeur de l'angle de lacet dans l'équation d'observation en fonction de l'angle de cap et du décalage de pose de chaque trame de données de nuage de points.

**8.** Dispositif informatique, comprenant une mémoire et un processeur, la mémoire stockant des instructions lisibles par ordinateur, **caractérisé en ce que** les instructions lisibles par ordinateur, lorsqu'elles sont exécutées par le processeur, amènent le processeur à effectuer une pluralité d'opérations comprenant :

l'obtention, sur la base d'au moins deux trames de données de nuage de points obtenues par un dispositif de balayage laser (101) installé dans un véhicule par balayage d'une région cible, de premières coordonnées d'un élément de caractéristique de surface dans chaque trame de données de nuage de points, les premières coordonnées étant des coordonnées de l'élément de caractéristique de surface dans un système de coordonnées laser, l'élément de surface étant un objet présentant une position fixe dans la région cible et fonctionnant en tant qu'élément de base d'un point d'étalonnage ;
**caractérisé par** la pluralité d'opérations comprenant en outre :

la détermination, sur la base de données de carte de la région cible comprenant des coordonnées de longitude et de latitude et une coordonnée d'élévation de l'élément de caractéristique de surface dans un système de coordonnées de carte, de deuxièmes coordonnées de l'élément de caractéristique de surface dans chaque trame de données de nuage de points dans un système de coordonnées de véhicule par l'obtention de coordonnées de position de l'élément de caractéristique de surface inclus dans chacune des trames de données de nuage de points dans le système de coordonnées de carte à l'aide des données de carte et par la conversion des coordonnées de position obtenues en deuxièmes coordonnées dans le système de coordonnées de véhicule à l'aide de coordonnées de position du véhicule dans le système de coordonnées de carte ;
la détermination, pour chaque trame de données de nuage de points, d'un décalage de pose de chaque trame de données de nuage de points sur la base des premières coordonnées et des deuxièmes coordonnées de l'élément de caractéristique de surface, le décalage de pose comprenant une valeur d'un décalage de position et une valeur d'un angle de lacet entre le système de coordonnées de véhicule et le système de coordonnées laser pour chaque trame de données de nuage de points ; et
le calcul d'une valeur d'un paramètre extrinsèque laser, comprenant un décalage de position et un angle de lacet entre le système de coordonnées laser et le système de coordonnées de véhicule, du dispositif de balayage laser (101) en fonction de décalages de pose desdites au moins deux trames de données de nuage de points, afin d'étalonner le dispositif de balayage laser (101).

**9.** Dispositif informatique selon la revendication 8, l'opération d'obtention, sur la base d'au moins deux trames de données de nuage de points obtenues par un dispositif de balayage laser (101) par balayage d'une région cible, de premières coordonnées d'un élément de caractéristique de surface dans chaque trame de données de nuage de points comprenant :

le balayage de la région cible sur la base d'un trajet de balayage prédéfini à l'aide du dispositif de balayage laser (101), afin d'obtenir lesdites au moins deux trames de données de nuage de points, la région cible étant une région quelconque comprenant l'élément de caractéristique de surface ; et

l'extraction, pour chaque trame de données de nuage de points, des premières coordonnées de l'élément de caractéristique de surface dans le système de coordonnées laser.

10. Dispositif informatique selon la revendication 8, l'opération de détermination, pour chaque trame de données de nuage de points, d'un décalage de pose de chaque trame de données de nuage de points en fonction des premières coordonnées et des deuxièmes coordonnées de l'élément de caractéristique de surface comprenant :

l'obtention d'un décalage de pose initial entre le système de coordonnées de véhicule et le système de coordonnées laser ;

la détermination, pour chaque trame de données de nuage de points, de troisièmes coordonnées de l'élément de caractéristique de surface en fonction du décalage de pose initial et des deuxièmes coordonnées de l'élément de caractéristique de surface, les troisièmes coordonnées étant des coordonnées de l'élément de caractéristique de surface dans le système de coordonnées laser ; et

la détermination du décalage de pose de chaque trame de données de nuage de points en fonction des premières coordonnées et des troisièmes coordonnées de l'élément de caractéristique de surface.

11. Dispositif informatique selon la revendication 10, l'opération de détermination du décalage de pose de chaque trame de données de nuage de points en fonction des premières coordonnées et des troisièmes coordonnées de l'élément de caractéristique de surface comprenant :

le calcul d'une première distance entre chaque premier point et un deuxième point voisin et d'une deuxième distance entre chaque premier point et un élément linéaire voisin en fonction des premières coordonnées et des troisièmes coordonnées de l'élément de caractéristique de surface, le premier point étant un point dans l'élément de caractéristique de surface qui correspond aux premières coordonnées, le deuxième point étant un point dans l'élément de caractéristique de surface qui correspond aux troisièmes coordonnées et l'élément linéaire étant un élément linéaire dans l'élément de caractéristique de surface qui correspond aux troisièmes coordonnées ; et

la détermination du décalage de pose de chaque trame de données de nuage de points en fonction de la première distance et de la deuxième distance.

12. Dispositif informatique selon la revendication 8, l'opération de calcul d'une valeur d'un paramètre extrinsèque laser du dispositif de balayage laser (101) en fonction de décalages de pose desdites au moins deux trames de données de nuage de points comprenant :

l'établissement d'une équation d'observation entre les décalages de pose desdites au moins deux trames de données de nuage de points, le décalage de position, l'angle de lacet et un écart de système, l'écart de système indiquant une erreur de système dans les données de carte ;

l'obtention, pour chaque trame de données de nuage de points, d'un angle de cap du véhicule qui correspond à chaque trame de données de nuage de points ; et

le calcul d'une valeur du décalage de position et d'une valeur de l'angle de lacet dans l'équation d'observation en fonction de l'angle de cap et du décalage de pose de chaque trame de données de nuage de points.

13. Support d'enregistrement lisible par ordinateur, non volatil, stockant des instructions lisibles par ordinateur, les instructions lisibles par ordinateur, lorsqu'elles sont exécutées par un ou plusieurs processeurs, amenant ledit un ou lesdits plusieurs processeurs à mettre en oeuvre le procédé d'étalonnage d'un dispositif de balayage laser (101) selon l'une quelconque des revendications 1 à 7.

Driving system

Laser scanning device — 101

Navigation system — 102

FIG. 1

A terminal scans a target region based on a preset scanning route by using a laser scanning device, to obtain at least two frames of point cloud data, the target region being any region including a surface feature element — 201

↓

The terminal extracts, for each frame of point cloud data, first coordinates of the surface feature element in a laser coordinate system — 202

↓

The terminal obtains map data of the target region from a navigation system, the map data including longitude and latitude coordinates and an elevation coordinate of the surface feature element in a map coordinate system — 203

↓

The terminal determines, for each frame of point cloud data according to the map data of the target region, second coordinates of the surface feature element in a vehicle coordinate system — 204

↓

The terminal obtains an initial pose offset between the vehicle coordinate system and the laser coordinate system — 205

↓

The terminal determines, for each frame of point cloud data, third coordinates of the surface feature element according to the initial pose offset and the second coordinates of the surface feature element, the third coordinates being coordinates of the surface feature element in the laser coordinate system — 206

↓

The terminal determines a pose offset of each frame of point cloud data according to the second coordinates and the third coordinates of the surface feature element — 207

↓

The terminal establishes an observation equation between pose offsets of the at least two frames of point cloud data, an position offset, a yaw angle, and a system deviation, and the terminal obtains, for each frame of point cloud data, a heading angle of a vehicle that corresponds to each frame of point cloud data — 208

↓

The terminal calculates a value of the position offset and a value of the yaw angle in the observation equation according to the heading angle and the pose offset of each frame of point cloud data — 209

FIG. 2

24

Preset scanning route

Circular route

Region A

● Start point B

FIG. 3

First distance

Point C
●

● Point D

FIG. 4

Second distance

Point C

Line L

FIG. 5

Apparatus for calibrating a laser scanning device

Obtaining module — 601

First determining module — 602

Second determining module — 603

Calculation module — 604

FIG. 6

<u>700</u>

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710731253X
- EP 2990828 A1
- WO 2014152254 A2